# EUROPÄISCHE PATENTSCHRIFT

(11) **EP 2 956 498 B1**
(45) Veröffentlichungstag und Bekanntmachung des Hinweises auf die Patenterteilung: **11.10.2023**
(21) Anmeldenummer: 14705094.2
(22) Anmeldetag: 11.02.2014
(51) Int. Cl.: C08J 7/04, C09D 183/00

(54) **SILIKONBESCHICHTETE TRENNFOLIEN MIT BESONDERER VAKUUMTIEFZIEHFÄHIGKEIT**
SILICONE-COATED RELEASE FILM WITH A SPECIAL VACUUM DEEP DRAWING CAPABILITY
FEUILLES DE SÉPARATION SILICONÉES AYANT UNE EXCELLENTE PROPRIÉTÉ À L'EMBOUTISSAGE SOUS VIDE

(30) Priorität: 12.02.2013 DE 102013002331
(43) Veröffentlichungstag der Anmeldung: 23.12.2015
(73) Patentinhaber: Fraunhofer-Gesellschaft zur Förderung der angewandten Forschung e.V., 80686 München (DE)
(72) Erfinder: WILKEN, Ralph, 26180 Rastede (DE); OTT, Matthias, 21255 Dohren (DE); VISSING, Klaus-Dieter, 27321 Thedinghausen (Morsum) (DE); GRAßL, Gregor, 21684 Stade (DE)
(74) Vertreter: Eisenführ Speiser
(86) Internationale Anmeldenummer: PCT/EP2014/052668
(87) Internationale Veröffentlichungsnummer: WO 2014/124945

(56) Entgegenhaltungen:
- EP-A1- 2 085 446
- EP-A2- 0 215 189
- EP-A2- 0 356 054
- DE-A1-102007 010 071
- US-A1- 2005 075 020

## Beschreibung

Die Erfindung betrifft silikonbeschichtete Trennfolien mit besonderer Vakuumtiefziehfähigkeit. Ferner betrifft die Erfindung die Verwendung solcher silikonbeschichteter Trennfolien als Schutz und/oder Trennhilfe zwischen einer Form und entstehendem Werkstück in einem formgebenden Verfahren zur Herstellung eines solchen Werkstücks, insbesondere in einem Verfahren zur Herstellung von Kunststoff-Formteilen aus faserverstärkten Kunststoffen, auch als Faserverbundwerkstoffe bezeichnet, im Vakuuminjektions- bzw. Vakuuminfusionsverfahren, Prepreg-Verfahren, Handauflegeverfahren, RTM-Verfahren (Spritzpressen), Pressverfahren, Wickelverfahren oder Faserspritzverfahren.

Faserverstärkte Kunststoffe bestehen aus matrixgebundenen Fasern, die schichtweise aufgebaut sein können. Die Fasern können orientiert, unorientiert oder gewebt sein. Weiterhin können die Fasern aus unterschiedlichen Materialien bestehen, wie etwa Glasfasern, Kohlenstofffasern, Aramidfasern, Borfasern, Naturfasern oder Holz. Die einzelnen Schichten können aus unterschiedlichen Materialien bestehen. So sind auch Metallgewebe, Schaum, dreidimensionale Strukturplatten, wie etwa Waben, oder Holz zum Aufbau solcher Faserverbundwerkstoffe geeignet. Die Matrix kann aus einem Reaktionsharz bestehen, das chemisch oder thermisch gehärtet werden kann. Chemisch härtbare Reaktionsharze sind etwa Polyester-, Vinylester- oder Epoxidharze. Thermisch härtbare Harze sind Melamin oder Phenol-Formaldehydharze.

Das bekannteste Verfahren zur Herstellung von solchen faserverstärkten Kunststoffen ist das Handlaminieren von Glasfasermatten oder Geweben in oder auf eine offene Form. In seinen Grundzügen ist dies dem Laien von Do-it-yourself-Reparaturen, beispielsweise von Kfz-Karosserien, etwa vor einem Gebrauchtwagenverkauf bekannt. Zum Herstellen von Formteilen durch Handlaminieren wird zunächst in die Form ein Trennmittel aufgetragen. Auf dieses kann das sogenannte "Gelcoat" aufgebracht werden. Als Gelcoat wird eine harte Lackschicht bezeichnet, die auf einem Formteil aus faserverstärkten Kunststoffen angeordnet ist und mehrere Millimeter stark sein kann. Auf das Gelcoat werden nach seinem Aushärten die Fasern in Form von Matten oder Geweben aufgetragen und mit einem Harz getränkt. Es können mehrere Schichten Fasern aufgetragen und mit Harz getränkt werden. Die Härtung solcher mit Harz getränkter Fasern kann durch Zusatz von chemischen Härtern zum Harz vor der Verarbeitung bewirkt werden. Solche Härter können etwas Radikalstarter auf Basis von Benzoylperoxid oder Azobisisobutyronitril sein. Die Härtung kann bei Raumtemperatur oder auch bei erhöhter Temperatur bis zu 230 °C erfolgen. Ein ähnliches Verfahren ist das Vakuum-Injektionsverfahren. Dabei werden die trockenen Fasern mit einer Folie abgedeckt, nach Anlegen von Vakuum durch den auf die Abdeckfolie wirkenden äußeren Luftdruck verdichtet und anschließend das Harz eingespritzt, welches sich innerhalb der Fasern verteilt. Ein weiteres Verfahren ist das Faserspritzen in die offene Form. Dabei wird eine Masse aus Fasern und Harz in die Form oder auf das ausgehärtete Gelcoat gespritzt, wobei die Fasern verhältnismäßig kurz sind (bis 50 mm). Beim Prepreg-Verfahren werden Halbzeuge aus Fasern, die mit härtbarer Matrix imprägniert sind, die so genannten Prepregs, verwendet. Diese sind in Form von Matten erhältlich, werden zugeschnitten in die Form gebracht und durch Überdecken mit einer Folie und Anlegen von Vakuum in die Form gepresst. Anschließend wird das Harz unter Druck und hoher Temperatur ausgehärtet. Das Aushärten kann bei Temperaturen bis zu 200 °C erfolgen.

Nach dem Aushärten wird das Werkstück entformt. Auf diese Weise können Teile für Segelflugzeuge, Rotorblätter für Windanlagen, Bootsrümpfe, Kfz-Teile, Rohre, Schwimmbecken und vieles mehr hergestellt werden.

In allen dieser Verfahren ist es von großer Bedeutung, die Form vor dem Auftragen der ersten Gelcoat- oder Harzschicht mit einem Trennmittel zu behandelt, um eine Entformung des Werkstückes zu ermöglichen. Diese Trennmittel verbleiben nach der Entformung auf dem Kunststoff-Formteil und auf der Formoberfläche. Dadurch müssen die Formteile und die Formen häufig aufwändig von den Trennmittelrückständen befreit werden. Zudem werden die Formteile teilweise klebtechnisch gefügt und / oder sehr aufwändig lackiert, was eine wirksame Entfernung von Trennmitteln erfordert. Es bestand daher der Bedarf, auf das Entfernen der Trennmittel vom fertigen Werkstück verzichten zu können. Eine Lösung könnte die Verwendung einer flexiblen Trennfolie für mittlere Anforderungen an die Oberflächenqualität sein, die die besonderen Erfordernisse insbesondere des Prepreg- und Vakuuminjektionsverfahrens erfüllt und dabei preisgünstig ist. Eine flexible Folie im Sinne dieser Schrift ist eine bei Raumtemperatur vakuumtiefziehfähige Folie, die von üblicherweise als tiefziehfähig bezeichneten Folien, die beim Thermoformen eingesetzt werden, unterschieden werden muss. Solche thermoformbaren Folien werden zur Formgebung erhitzt und entweder durch einen als Formhelfer bezeichneten Stempel, Druckluft oder Vakuum in ein gekühltes Werkzeug hinein geformt und nach dem Erstarren entnommen. Die flexible Trennfolie (vakuumtiefziehfähige Folie) in Sinne der vorliegenden Schrift soll dagegen komplexe Formoberflächen allein durch den Atmosphärendruck faltenfrei und ohne Lufteinschlüsse konturgenau abdecken. Die Folie muss nach der Entformung des ausgehärteten Werkstücks gemeinsam mit dem Trennmittel vom Werkstück entfernt werden können. Auf eine dauerhafte thermoplastische Verformung oder Verformbarkeit an sich kommt es bei dieser flexiblen, kalt vakuumtiefziehfähigen Folie nicht an. Letztere stellt vielmehr eine unerwünschte Eigenschaft dar, weil Thermoplastizität beim thermischen Aushärten des Werkstücks zu einer unerwünschten Verklebung des Werkstücks mit der Folie führen könnte.

Weiter werden viele hochwertige Kunststoff-Formteile und insbesondere Formteile aus faserverstärkten Kunststoffen mit einer Schutzfolie versehen, um sie insbesondere gegen Verschmutzungen zu schützen. Daher wäre es wünschenswert, wenn die Trennfolie auch zu diesem Zweck geeignet ist.

In der JP 3128240 A wird eine mit Silikon beschichtete Entformungsfolie beschrieben, deren Beschichtung ein Silikonharz, das ein Silikonpuder einer Partikelgröße von 0,8 bis 4 µm in einem Gehalt von 0,02 bis 0,5 Gew.-%, bezogen auf das Silikonharz, enthält und ein Flächengewicht von 0,05 bis 1,0 g/qm aufweist. Durch die verhältnismäßig groben Silikonpuderpartikel weist die Folie eine besonders ausgeprägte Gleitfähigkeit und Antihafteigenschaften auf.

Dass es sich hierbei um eine flexible, d.h. an feine Konturen besonders anpassungsfähige Folie mit einer besonderen Transferresistenz, also der Neigung, kein Trennmittel auf dem Werkstück zurückzulassen, handelt, ist nicht erkennbar.

Die Schrift JP 9076249 A offenbart ein Trennmittel in Form einer wässrigen Silikonöl-Dispersion. Das Silikonöl kann nach dem Auftragen der Dispersion auf eine Form thermisch vernetzt werden. Dieses Trennmittel enthält zinnorganische Verbindungen und kann zusätzlich nicht-ionische Tenside enthalten. Diese Veröffentlichung offenbart keine Trennfolie, sondern nur das Trennmittel selbst. Es ist nicht erkennbar, ob nach Verwendung des Trennmittels das später entformte Werkstück frei von Silikonöl ist.

Die Schrift US 6057041 A offenbart eine Trennfolie aus Polyester, die eine Silikonharzschicht aufweist. Bei dem verwendeten Polyester handelt es sich um biaxial orientiertes Polyethylen-2,6-Naphthalindicarboxylat (PEN). Das Silikonharz ist ein vernetztes Silikonharz, das durch eine SiOₓ-Schicht, die zwischen Folie und Silikonharz angeordnet ist, auf der Polyesterfolie haftet. Diese haftvermittelnde Schicht wird durch Gasphasenabscheidung aufgebracht.

Bei der biaxal gereckten PEN-Folie handelt es sich nicht um eine flexible Folie, die sich den feinen Konturen einer Form gut anpassen kann. Darüber hinaus ist die Beschichtung mit SiOₓ in ihrer Herstellung ausgesprochen aufwendig. Über die Transferresistenz solcher Beschichtungen ist nichts bekannt.

Die Schrift JP 2000-289148 A offenbart eine heißsiegelfähige Folie mit einer Trennmittelschicht auf der Basis von Silikonen, die aus einem Thermoplast, wie verschiedenen Polyethylenen-Typen oder Polypropylenen, bestehen kann.

Aufgrund ihrer Heißsiegelfähigkeit ist diese Folie für die Hochtemperaturverarbeitung von Faserverbundbauteilen durch Tempern ungeeignet. Eine flexible Folie im Sinne der vorliegenden Schrift, d.h. eine Folie, die an feine Konturen besonders anpassungsfähig ist, wird nicht offenbart.

Die Schrift JP 2009-249570 A offenbart ein Silikontrennmittel für Folien und eine damit ausgestattete Folie. Dieses Silikontrennmittel ist vernetzungsfähig und enthält zwei verschiedene Alkenylorganopolysiloxane, ein Organohydropolysiloxan, einen Katalysator auf Basis von Platin und einen Additionsverzögerer.

Dieses aufwendig zusammengesetzte reaktive Trennmittel enthält nach seiner Vernetzung noch unerwünschte Reste an Katalysator und Additionsverzögerer.

Die Schriften JP 2011-201034 A und JP 2011-01035 A offenbaren eine entformbare Folie, die temperaturbeständig bis 180 °C und peelfähig ist. Die Folie selbst wird aus thermoplastischem Elastomer vorgesehen oder in Form einer Mehrschichtträgerfolie vorgeschlagen. Diese wird mit Fluorsilikonen, die Silylgruppen und hydrolisierbare Gruppen aufweisen, beschichtet. Weiterhin ist eine zusätzliche Bindungsschicht zwischen Trägerfolie und Silikonschicht vorgesehen.

Eine solche Folie muss aufwendig mit Fluorsilikonen hergestellt werden. Diese Fluorsilikone führen zudem zu einer erheblichen Verschlechterung der Oberflächeneigenschaften des gefertigten Bauteils.

Auch die Schriften DE 10 2007 010 071 A1 und EP 0 2515 189 A2 offenbaren Trennfolien.

Am Markt erhältliche silikonisierte Trennfolien sind thermoplastische Polymerfolien, die nicht genügend flexibel sind und keine ausreichenden Dehneigenschaften aufweisen, um sich an die feinen Konturen einer Form anpassen zu können.

Nach all dem fehlt es dem Stand der Technik an Trennfolien, die unaufwendig herzustellen und damit preisgünstig sind und zugleich eine genügende Anpassungsfähigkeit an die feinen Konturen einer Form aufweisen. Insbesondere fehlt es dem Stand der Technik an solchen Trennfolien, deren Beschichtung besonders transferresistent ist und die nach Entformung des Kunststoff-Formteils nicht teilweise am Werkstück haften bleibt. Insbesondere darf die Dehnung der Folie bei der Anpassung an die feinen Konturen einer Form nicht die Haftung der Beschichtung an der Trägerfolie verringern und so zu einem stärkeren Transfer von Trennmittel auf das Werkstück führen.

Die Aufgaben werden erfindungsgemäß gelöst durch eine silikonisierte Trennfolie für die Herstellung von Kunststoff-Formteilen aus Faserverbundwerkstoffen unter Verwendung einer Form, umfassend eine flexible, bei Raumtemperatur vakuumtiefziehfähige Trägerfolie und eine Beschichtung, die in flüssiger Form aufgetragen werden kann und die nach dem Entfernen eventueller Lösungsmittel zu mehr als 90 Atom% aus Silizium, Kohlenstoff und/oder Sauerstoff, zu mehr als 45 Atom% aus Kohlenstoff, sowie zu mehr als 20 Atom% aus Silizium besteht, jeweils bezogen auf die gesamte Beschichtung und gemessen durch XPS, dadurch gekennzeichnet, dass die Beschichtung durch Kondensationsreaktionen, Additionsreaktionen oder durch Strahlung vernetzt ist, wobei die erfindungsgemäßen Trennfolien die weiteren Merkmale des Anspruchs 1 aufweisen. Bevorzugt wird die Beschichtung durch Additionsreaktionen oder durch Strahlung vernetzt.

Unter Atomprozent im Sinne dieser Schrift ist der Wert zu verstehen, der von üblichen XPS-Geräten nach der Messung ausgegeben wird. Die verschiedenen Elemente außer Helium und Wasserstoff werden dabei anhand der jeweiligen, dem Element zugeordneten Zählraten quantifiziert und die Verhältnisse errechnet, wobei der Anteil an Helium und Wasserstoff unberücksichtigt bleibt.

Im Sinne der erfindungsgemäßen Lösung ist dabei die vakuumtiefziehfähige Trägerfolie eine vakuumtiefziehfähige Folie wie oben bei der Beschreibung des Standes der Technik definiert. Ferner ist es im Sinne der vorliegenden Beschreibung bevorzugt, dass die Beschichtung im ausgehärteten Zustand so fest auf der Trägerfolie haftet, dass im Falle eines Abzugtestes kein Adhäsionsversagen zwischen Trägerfolie und Beschichtung auftritt. Das heisst, dass der dann vorliegende Verbund aus Trägerfolie, Beschichtung und Abzugsmittel an einer anderen Stelle getrennt wird.

Die Erfindung umfasst auch ein Verfahren zur Herstellung einer beschichteten Trennfolie durch Beschichtung einer bei Raumtemperatur vakuumtiefziehfähigen Trägerfolie gemäß Anspruch 12, wobei die Folie in einem ersten Schritt durch eine Behandlung mit nasschemischen Primern, Corona, DBD, Niederdruckplasma, Atmosphärendruckplasma, und/oder Vakuum-UV-Strahlung aktiviert wird, in einem zweiten Schritt eine reaktive Silikonmischung durch Rakel oder Walzen aufgetragen wird, wobei das Flächengewicht 2 bis 50 g/m², bevorzugt 3 bis 15 g/m², besonders bevorzugt 3 bis 5 g/m² beträgt und in einem dritten Schritt die reaktive Silikonmischung (bevorzugt durch Temperatur oder Strahlung) vernetzt wird. Oft ist jedoch auch eine andere Form der Vernetzung bevorzugt, insbesondere eine Vernetzung durch Zusammengeben miteinander auch bei Raumtemperatur reaktiver Komponenten (z.B. 2K-System).

Bevorzugt ist es, wenn die Trägerfolie eine Spannung bei 50%-Dehnung nach DIN EN ISO 527 von 1 bis 40 MPa, bevorzugt von 5 bis 30 MPa aufweist. Weiter bevorzugt ist es, wenn die Trägerfolie einen Erweichungsbereich zwischen 100 und 450°C, besonders bevorzugt zwischen 120 und 250°C, ganz besonders bevorzugt zwischen 150 und 210°C aufweist. Besonders bevorzugt ist es, wenn die Beschichtung durch Strahlung vernetzt ist. Besonders bevorzugt ist es, wenn dass die vernetzte Beschichtung höchstens 5 Gew.%, bevorzugt höchstens 3 Gew.%, besonders bevorzugt höchstens 2 Gew.% extrahierbare Bestandteile enthält. Weiter bevorzugt ist es, wenn die Trägerfolie aus thermoplastischen Polyesterelastomeren (TPE-E); thermoplastischen Copolyestern (TPC); vernetzten thermoplastischen Elastomeren auf Olefinbasis (TPE-V / TPV), wie Mischungen aus Polypropylen und Ethylen-Propylen-Dien-Kautschuk (EPDM/PP), Mischungen aus Naturkautschuk und Polypropylen (NR/PP) oder Mischungen aus Nitrilkautschuk und Polypropylen (NBR/PP); thermoplastischen Elastomeren auf Urethanbasis (TPE-U / TPU); thermoplastischen Copolyamiden (TPE-A / TPA), wie beispielsweise PEBA und/oder Mischungen aus Ethylenvinylacetat und Polyvinylidenchlorid (EVA/PVDC) besteht. Besonders bevorzugte thermoplastische Polyesterelastomere (TPE-E) stellen Polyetherester dar. Besonders bevorzugt ist es, wenn die Trägerfolie eine Bruchspannung nach DIN EN ISO 527, längs und quer, von 10 bis 150 MPa, bevorzugt 30 bis 100 MPa aufweist. Die erfindungsgemäße Trägerfolie weist eine Bruchdehnung nach DIN EN ISO 527, längs und quer, von 100% bis 2000% auf, besonders bevorzugt 250 bis 1500%. Weiter besonders bevorzugt ist es, wenn die Trägerfolie eine Weiterreißwiderstand nach DIN ISO 34-1, B, längs und quer, von 30 bis 500 kN/m, besonders bevorzugt von 60 bis 300 kN/m aufweist. Bevorzugt ist es, wenn die Trägerfolie eine Foliendicke von 8 µm bis 250 µm, besonders bevorzugt von 15 bis 90 µm aufweist.

Die Erfindung umfasst auch die Verwendung einer oben beschriebenen erfindungsgemäßen Trennfolie als Entformungshilfe bei der Herstellung von Kunststoff-Formteilen aus Faserverbundwerkstoffen gemäß Anspruch 13 sowie die Verwendung einer oben beschriebenen erfindungsgemäßen Trennfolie als Schutzfolie für Kunststoff-Formteile aus Faserverbundwerkstoffen gemäß Anspruch 14.

Eine Ausführungsform der Erfindung ist die Verwendung der erfindungsgemäßen Folien als Entformungshilfe für dreidimensional gekrümmte bzw. komplexe Formoberflächen.

Diese Materialien haben sich in Kombination mit der erfindungsgemäßen vorzusehenden Beschichtung als besonders geeignet erwiesen, da sie trotz der mechanischen Belastungen, die ein Tiefziehen mit sich bringt, sowohl eine ausreichende Haftung zur Beschichtung bewahren als auch eine ausreichende Unversehrtheit der (Dehäsiv-)Beschichtung gewährleisten.

Eine bevorzugte Ausführungsform der Erfindung ist eine Beschichtung, deren Oberfläche (gemessen mit XPS) ohne die Berücksichtigung von Wasserstoff zu mehr als 45 Atomprozent aus Kohlenstoff besteht.

Eine weiter bevorzugte Ausführungsform der Erfindung ist der Einsatz erfindungsgemäßer Folien für Duromere; Thermoplaste; Matrixharz für Faserverbundkunststoffe (ausgehärtet oder nicht ausgehärtet), insbesondere auf Epoxidharz-, Polyurethanharz-, Polyesterharz-, Vinylesterharz- oder Phenolharzbasis; Kunststoffschaum; Lack insbesondere appliziert als Gelcoat; und Klebstoff.

Eine Ausführungsform der Erfindung ist der Einsatz erfindungsgemäßer Folien für die Herstellung von Kunststoffbauteilen, wobei die Kunststoffbauteile hergestellt sind nach einem Verfahren ausgewählt aus der Gruppe bestehend aus Spritzgießen; Reaction Injection Moulding (RIM); Schäumen; Verfahren zur Herstellung von Faserverbundwerkstoffen, insbesondere auf Basis von Kohlenstofffasern, Glasfasern, andere anorganische Fasern oder Polymerfasern, bevorzugt (Vakuum-)Infusion, Handlaminieren, Injektionsverfahren besonders bevorzugt Resin Transfer Moulding RTM, Nasspressverfahren, Faserspritzen, Prepregverfahren; in-Mould-Lackieren und Laminieren insbesondere zum Verbund mit Holz, Metall oder Kunststoff. Besonders bevorzugt ist dabei der Einsatz einer erfindungsgemäßen Trennfolie für das sog. Prepreg-Verfahren und auf einem Blitzschutz-Matrix-Verbund, bevorzugt einem Kupfer-Matrix-Verbund.

Beim Material für das sog. Prepreg-Verfahren wird Kunststoffhalbzeug als Bahnware geliefert. Die erfindungsgemäße Trennfolie kann dabei die einzelnen Schichten der Bahnware voneinander trennen (z.B. im aufgewickelten Zustand) und somit vor unerwünschten Verklebungen schützen. Beim Herstellen von Kunststoffformteilen aus diesem Halbmaterial ist es möglich, dass die untere Schicht, des in die Form eingeführten Materials, weiterhin mit der Folie versehen bleibt, so dass die Folie eine Trennwirkung gegenüber der Form ausüben kann.

Selbstverständlich ist es sinnvoll, nur den Kontaktbereich des Halbzeugs mit der Form von der erfindungsgemäßen Trennfolie bedecken zu lassen, während zwischen den Lagen des Halbzeugs, die miteinander zu dem fertigen Kunststoffformteil verschmolzen werden sollen, selbstverständlich die Trennfolie vor dem Aushärtungsprozess entfernt werden muss. Ein solches Kunststoffhalbzeug kann z.B. in Prepreg-Verfahren eingesetzt werden und somit entwickelt der Verbund mit der erfindungsgemäßen Trennfolie eine Reihe von besonderen Vorteilen, wie gute Handhabbarkeit und Einsatzmöglichkeit in Formgebungsverfahren ohne besondere Trennhilfe.

Eine Ausführungsform der Erfindung ist die Lackierung der erfindungsgemäßen Trennfolie. Eine solche Lackierung kann mit dem Kunststoffmaterial für das Kunststoffformteil gemeinsam ausgehärtet werden und verbleibt nach dem Abziehen des Schutzschichtsystems auf dem entstandenen Kunststoffbauteil, so dass dieses bereits lackiert vorliegt.

Eine bevorzugte Ausführungsform der Erfindung ist eine Trennfolie, wobei die Trennfolie mit einer Haftkraft von ≥ 0,005 N/cm, bevorzugt ≥ 0,02 N/cm, weiter bevorzugt ≥ 0,04 N/cm und/oder ≤ 5 N/cm, bevorzugt ≤ 2 N/cm und besonders bevorzugt ≤ 0,5 N/cm in einem 180°-Abschältest mit einer Schälgeschwindigkeit von ca. 120 cm/min, von dem ausgehärteten Kunststoffbauteil oder dem ausgehärteten Kunststoffhalbzeug gelöst werden kann. Dabei wird zur Erlangung einer relativ starken Haftung der Trennfolie eine Beschichtungszusammensetzung ausgewählt, die einen innerhalb der oben angegebenen Grenzen einen relativ hohen Gehalt an Sauerstoff im Vergleich zu dem Gehalt an Kohlenstoff aufweist. Hingegen wird zur Erlangung einer relativ geringen Haftung der Verbundfolie eine Beschichtungszusammensetzung für Beschichtung ausgewählt, die einen innerhalb der oben angegebenen Grenzen einen relativ geringen Gehalt an Sauerstoff im Vergleich zu dem Gehalt an Kohlenstoff aufweist.

Teil der Erfindung ist eine Anordnung zu einer Form zur Formgebung eines Kunststoffwerkstückes und darin tiefgezogen eine erfindungsgemäße Trennfolie.

Im Regelfall hat eine Form zur Formgebung eines Kunststoffwerkstückes eine dreidimensionale Ausgestaltung in dem Bereich, in dem sie formgebend wirken soll. Dementsprechend ist auch die tiefgezogene erfindungsgemäße Trennfolie an diese dreidimensional strukturierte Oberfläche in der erfindungsgemäßen Anordnung angepasst.

In der erfindungsgemäßen Anordnung sind dabei die Haftungsverhältnisse so ausgestaltet, dass bei einem Abzugstest ein Adhäsionsversagen zwischen der erfindungsgemäßen Trennfolie und der Form stattfindet. Mit anderen Worten, die Kohäsionskräfte innerhalb der Trennfolie sind größer als die Adhäsionskräfte zwischen Trennfolie und Form.

Bevorzugt ist eine erfindungsgemäße Anordnung, bei der auf der in der Form zur Formgebung tiefgezogenen Trennfolie Material für ein (zu formendes) Kunststoffwerkstück vorhanden ist. Besonders bevorzugt ist, dass das Material für das Kunststoffwerkstück wenigstens teilausgehärtet, bevorzugt vollständig ausgehärtet ist.

Nach der Aushärtung des Kunststoffwerkstückes ist die Stelle mit der niedrigsten Haftkraft in der gesamten Anordnung die Grenzfläche zwischen Form und Trennfolie, so dass bei der Entnahme des Kunststoffwerkstückes aus der Form ein Adhäsionsversagen an dieser Stelle auftritt.

Innerhalb des dann verbleibenden Verbundes aus Kunststoffwerkstück und Schutzfolie ist dann der Bereich mit der geringsten Haftkraft die Grenzfläche zwischen der Beschichtung der Trägerfolie unter dem Kunststoffwerkstück. Somit kann die Trennfolie als Ganzes vom Kunststoffwerkstück abgezogen werden. Dabei wird es in vielen Fällen zu einem "Abklatsch" kommen, d.h., dass die Trennung im Bereich einer Grenzschicht entsteht, die durch nicht-vernetzte Bestandteile der Beschichtung der Trägerfolie entsteht.

Es kann jedoch in einigen Fällen bevorzugt sein, die Beschichtung der Trägerschicht so auszugestalten, dass keine oder so gut wie keine unvernetzten Bestandteile mehr in der Beschichtung enthalten sind. In diesem Falle würde die Trennung durch einen Adhäsionsbruch zwischen Werkstück und Beschichtung der Trägerfolie erfolgen.

Eine Ausführungsform der Erfindung ist die Verwendung der Trennfolie als Schutzfolie, insbesondere in ihren oben beschriebenen bevorzugten Ausgestaltungsformen, und als Trennhilfe zur Form in einem Kunststoffformgebungsprozess.

Durch die Verwendung der Trennfolie lassen sich Trennmittel einsparen, ebenso wie aufwändige Säuberungsschritte zur Entfernung des Trennmittels von der Form und dem entformten Bauteil.

Eine Ausführungsform der Erfindung besteht darin, zunächst einen Lack auf das (bevorzugt tiefziehfähige) Schutzschichtsystem zu gegeben, diesen ggf. teilauszuhärten und anschließend mit dem eigentlichen Kunststoffmaterial für das Kunststoffbauteil oder das Kunststoffhalbzeug in Verbindung zu bringen. Wie bereits oben angedeutet, ist es möglich, den Lack gemeinsam mit dem Kunststoffmaterial für das Bauteil auszuhärten. Dabei ist es besonders bevorzugt, dass die Kombination aus Schutzschichtsystem, ggf. Lack und Material für das Kunststoffbauteil bzw. das Kunststoffhalbzeug (Matrixmaterial) gemeinsam eine (wickelbare) Bahnware darstellt, bei der das Matrixmaterial beispielsweise thermisch ausgehärtet werden kann, z.B. nach Einlegen in eine entsprechende Form.

Es ist für den Fachmann selbstverständlich, dass die erfindungsgemäße Trennfolie so lange auf dem (ausgehärtete) Kunststoffbauteil verbleiben kann, bis dieses an seiner Funktionsstelle ist. Somit kann die Trennfolie das Bauteil während des Transportes und des Handlings schützen und zum spätestmöglichen Zeitpunkt vom Bauteil abgezogen werden.

Zur Fertigung eines lackierten Faser-Verbundbauteils kann bei der Herstellung des Prepreg-Materials nicht nur die erfindungsgemäße Trennfolie verwendet werden, sondern auch ein Lackfilm (vorzugsweise als nicht vollständig ausgehärtetes umformbares Folienmaterial), welcher zwischen der Folie und einem unidirektionalem Phenolharz-Prepregmaterial angeordnet ist. Mit Hilfe dieses Prepreg-Aufbaus kann Rollen- oder Tafelware einem beheizten Umformwerkzeug zugeführt werden, in welchem der Verbund in die endgültige Form gebracht und ausgehärtet wird.

Durch die tiefziehfähige Trennfolie wird die Lackoberfläche während der Verarbeitung und ggf. während der Weiterverarbeitung und/oder des Transportes des Bauteils geschützt. Außerdem gewährleistet sie saubere Umformwerkzeuge ohne Trennmittelaufbau, sowie eine gleichbleibende Lackoberfläche mit einer lösemittelfreien Fertigung.

Für die Herstellung des Prepregmaterials wird eine 40 µm dicke TPE-E-Folie, welche zuvor auf der dem Prepreg zugewandten Seite silikonisiert worden war, verwendet. Auf diese Beschichtung wird die Lackfolie aufgebracht. Auf die Lackfolie wird das vorimprägnierten Fasermaterial aufgebracht. Dabei können nicht nur unidirektionale Schichten oder Gewebe aufgebracht werden, sondern es kann auch Kurzfasermaterial zur Herstellung (quasi-)isotroper faserverstärkter Kunststoffe, beispielsweise durch Aufsprühen, aufgebracht werden. Die so entstandene Oberfläche wird in der Regel durch eine Trennfolie oder ein Trennpapier abgedeckt. Sollte das zu fertigende Faserverbund-Bauteil mit nur einer Lage dieses lackhaltigen Halbzeugs gefertigt werden, kann eine weitere Lage der oben beschriebenen silikonisierten TPE-E-Folie verwendet werden.

Nach dem Umformen und Aushärten kann die TPE-Folie zunächst noch als Oberflächenschutz auf dem Faserverbund-Bauteil verbleiben und wird erst bei Bedarf abgezogen. Dabei verbleibt die Silikonisierung auf der TPE-Folie. Durch die gemeinsame Aushärtung von Lackfolie und Prepregmaterial im beheizten Umformwerkzeug entsteht ein haftfester Verbund. Oberflächenfehler in der Lackoberfläche durch den Umformungsprozess werden durch die dehnfähige Trennfolie ebenso wirksam unterdrückt wie klassische Lackierfehler durch Staub oder Ausgasungen aus dem Fasermaterial.

Mit Hilfe der RTM-Technik kann ein CFK-Bauteil hergestellt werden, indem die Faserhalbzeuge zuvor mit Hilfe eines Preform-Verfahrens vorkompaktiert werden. Hierzu werden binderhaltige Carbonfaser-Gewebe trocken in einer Preform-Anlage durch Verpressen umgeformt und kompaktiert. Dabei wird eine Temperatur gewählt, die ein Anschmelzen des Binders bewirkt.

Dabei wird eine 35 µm dicke TPE-E Folie, welche auf der zum textilen Flächenhalbzeug gerichteten Seite ist, vor dem Ablegen der behinderten textilen Flächenhalbzeuge in das Preform-Werkzeug gelegt und verbleibt bis zur Abschluss der Fertigung des CFK-Bauteils auf der der Injektionsstelle gegenüberliegenden Seite des Bauteils. Das injizierte Epoxid-Harz muss daher auf der Seite mit der Injektionsstelle weiterhin mit Hilfe von klassischen Trennmitteln von der Werkzeugoberfläche getrennt werden.

Eine andere Variante kann verwirklicht werden, indem eine 35 µm dicke TPE-E Folie, welche auf der zum textilen Flächenhalbzeug gerichteten Seite silikonisiert wurde, vor dem Ablegen der behinderten textilen Flächenhalbzeuge in das Preform-Werkzeug gelegt wird. Nach dem Ablegen wird mit einer weiteren Lage der gleichen flexiblen Trennfolie die textilen Flächenhalbzeuge umschlossen. Nach dem Preformen, dem Aufschmelzen des Binders unter Druck bei erhöhter Temperatur, bietet die Trennfolie zugleich einen Schutz für das textile Halbzeug, beispielweise gegen das Ausfransen. Die zuvor beschriebene Trennfolie umschließt bis zum Abschluss der Fertigung das CFK-Bauteil. Die Folie wird vor dem Injizieren an den Injektionsstellen geöffnet, damit das Harz zu dem Fasermaterial strömen kann.

Zur Herstellung von Glasfaser-Kunststoff-Verbunden können Sheet Molding Compound (SMC) Pressmassen mit Glasfasern mit ungesättigtem Polyesterharz in einem Bahnwarenprozess von beiden Seiten mit einer 30 µm starken TPC-Folie, die auf der innenliegenden Seite silikonisiert ist, bedeckt werden.

Nach dem Zurechtschneiden können die so ausgestatteten SMC-Platten ohne ein flächiges Eintrennen der Werkzeugoberfläche durch Pressen umgeformt und unter erhöhter Temperatur ausgehärtet werden.

Zur Herstellung eines Faser-Verbundbauteil durch Wickeltechnik wird ein Schlauch aus 50 µm starker TPC-Folie, der auf der Außenseite silikonisiert ist, über den Kern einer Wickelanlage, der sich zur Außenseite verjüngt, gezogen. Hierbei wird der Schlauch in Bereichen mit einem geringen Kerndurchmesser um ca. 5% und an Positionen mit großem Kerndurchmesser um ca. 50% gedehnt. Anschließend werden mit Epoxidharz getränkte Carbonfaser-Rovings auf die Folie gewickelt.

Nach dem thermischen Aushärten kann der Trennfolienschlauch ohne Probleme per Hand aus dem CFK-Bauteil gezogen werden.

### Beispiele

### Beispiel 1

### Herstellung von erfindungsgemäßen Trennfolien

Zur Herstellung des erfindungsgemäß einzusetzenden (temporären) Schutzschichtsystems wurde die thermoplastische Elastomerfolie auf Basis von thermoplastischen Co-Polyetherestern (TPE-E) Platilon M 0486 mit einer Dicke von 38 µm von Epurex Films mit Hilfe einer Plasmabehandlung bei Niederdruck vorbehandelt: Hierfür wurde eine 1,8 m breite Folie in einem 3 m³ großen zylindrischen geerdeten Rezipienten mit einem Durchmesser von 1,2 m mit einem Abstand von 60 mm auf einer Strecke von 2 x 400 mm vor zwei 2,5 m x 400 mm großen gekühlten Hochfrequenz(HF)-Plattenelektroden geführt. Dazu wurde die aufgerollte Folie abgewickelt, über Rollen parallel zu den Elektroden geführt und anschließend aufgewickelt. Nach vollständigem Abwickeln wurde dieser Prozess jeweils in entgegengesetzter Richtung wiederholt. Es wurde Hochfrequenz bei 13,56 MHz eingekoppelt.

Dabei wurden folgende Parameter gewählt:
Bahngeschwindgkeit: 4 m/min,
Leistung des HF-Generators:3500 W,
Gaszufuhr (Sauerstoff): 2000 sccm (Standardkubikzentimeter/min),
Druck: 5 Pa,
Behandlungszeit: 7 Tage.

Die so vorbehandelte Folie wurde mit additionsvernetzenden Silikonisierungszubereitungen beschichtet.

**Tabelle 1: Additionsvernetzende Silikonisierungszubereitungen**

| **Substanzen** | **S 1** | **S 2** |
|---|---|---|
| ViPo 200 (vinylterminiertes PDM), Wacker-Chemie GmbH | 50 0 g | 32 5 g |
| V24 (Polyhydrogenmethylsiloxan), Wacker-Chemie GmbH | 12, 68 g | 20, 83 g |
| MQ 804 (controlled release additive CRA), Wacker-Chemie GmbH | | 17 5 g |
| Katalysator OL (Platin-Katalysator-Komplex OL), Wacker-Chemie GmbH | 5,1 8 g | 5,2 6 g |

Die jeweilige additionsvernetzende Silikonisierungszubereitung wurde auf die Folie über Walzenauftragstechnik mit einem Auftragsgewicht von 3,1 g/m² ± 0,2 g/m² aufgetragen. Anschließend wurde zur Vernetzung der Beschichtung die mit der Silikonisierungszubereitung S1 behandelte Folie 24 h bei Raumtemperatur belassen, die mit der Silikonisierungszubereitung S2 behandelte Folie für 30 min auf 70 °C erhitzt.

Der Anteil extrahierbarer Bestandteile ist ein Maß für die Übertragung von Silikonen auf das Bauteil, weil sich aus der Silikonisierung, also der vernetzten Beschichtung der Folie, nicht vernetzte Bestandteile herauslösen lassen. Für diese Bestimmung extrahierbarer Bestandteile werden die Silikonisierungen extrahiert, indem 100 cm² der silikonisierten Folie in 15 ml Methylisobutylketon 24 h gelagert werden. Die Silikonkonzentration des Extrakts und damit die extrahierte Silikonmenge lässt sich mit der Atomabsorptionsspektroskopie (Perkin Elmer 1100 B ausgerüstet mit Si Lumina Lamp) ermitteln. Außerdem wird das Silikonauftragsgewicht der silikonisierten Folien mit Hilfe der Röntgenfluoreszenzanalyse bestimmt. Dafür ist das Gerät Oxford Lab-X 3000 eingesetzt worden. Der Quotient aus der Menge der extrahierten Silikonmenge und dem Auftragsgewicht ergibt schließlich den Gehalt an extrahierbaren Bestandteilen.

Bei den beiden o.g. silikonisierten Folien ergibt sich ein Gehalt an extrahierbaren Bestandteilen von 1,5 Gew.% +- 0,2 Gew.% bezogen auf das Gesamtgewicht der Silikonisierung.

### Beispiel 2

### XPS-Messungen

Die XPS-Messungen (ESCA-Messungen) wurden mit dem Spektrometer Escalab der Firma VG durchgeführt. Die Kalibrierung des Messgerätes wurde so vorgenommen, dass der aliphatische Anteil des C 1s Peaks bei 285,00 eV liegt. Aufgrund von Aufladungseffekten war es notwendig, die Energieachse ohne weitere Modifikation auf diesen Fixwert zu verschieben. Die Analysekammer war mit einer Röntgenquelle für monochromatisierte Al Kα-Strahlung, einer Elektronenquelle als Neutralisator und einem Quadrupolmassenspektrometer ausgerüstet. Weiterhin verfügte die Anlage über eine magnetische Linse, welche die Photoelektronen über einen Eintrittsschlitz in einen Halbkugelanalysator fokussierte. Während der Messung zeigte die Oberflächennormale auf den Eintrittsschlitz des Halbkugelanalysators. Die Passenergie beträgt bei der Bestimmung der Stoffmengenverhältnisse jeweils 80 eV. Bei der Bestimmung der Peak-Parameter beträgt die Passenergie jeweils 20 eV. Die Sensitivitätsfaktoren sind so justiert worden, dass bei Messung eines langkettigen Silikonöls DMS T 23 der Fa. ABCR, M_{W} = 13500 g/mol die theoretische Elementzusammensetzung von 25 at% Si, 25 at% O und 50 at% C ermittelt wird.

Maßgeblich für den Kontaminationsgrad ist der Si-Gehalt der Oberfläche der entformten Kunststoffbauteile (wie in Beispiel 5 angeführt). Im Folgenden sind die Si-Gehalte angegeben:
Messung der silikonisierten Folie nach Beispiel 1 - S1: 24,9 at% Si
Messung der silikonisierten Folie nach Beispiel 1 - S2: 25,1 at% Si

### Beispiel 3

### Tiefziehfähigkeit

Zur Ermittlung der Tiefziehfähigkeit wurden Folienabschnitte aus Beispiel 1 - S2 in einer offenen Form bei Raumtemperatur mit Vakuum-Unterstützung bis zu einer Dehnung von 250% tiefgezogen und anschließend Gelcoat der Firma Bergolin mit der nachfolgenden Zusammensetzung aufgebracht und bei Raumtemperatur ca. 3 Stunden ausgehärtet:
- Steodur PUR GELCOAT Handmasse 6D970-5015-1; 50 g
- Steodur PUR HARDNER 7D202; 30 g
- Steodur PUR Beschleuniger Blau 6D972-0000; 1,5 ml

Anschließend konnten die Folienabschnitte mit den Beschichtungen problemlos abgezogen werden. Dies galt sogar für die Bereiche mit einer Dehnung von 250%.

### Beispiel 4

### Messung des Schälwiderstands (180° Schältest)

Die Folienmuster nach Beispiel 1 -S1 und nach Beispiel 1 -S2 sowie eine unbeschichtete, also silikonfreie Folie nach Beispiel 1 wurden jeweils mit dem 2-K-Epoxid-Klebstoff 2011 Araldite 2001 der Firma Huntsman mit einer Klebstoffdicke von ca. 0,5 mm auf eine Polycarbonatplatte geklebt. Nach 24 Stunden bei Raumtemperatur wurden in Anlehnung an die ASTM D 903 jeweils 5 Folienstreifen à 25 mm Breite und 152 mm Länge mit einem Cutter-Messer von oben herausgeschnitten und mit einer Materialprüfmaschine (Z020 von Zwick) mit einem Winkel von 180° und einer Geschwindigkeit von 152 mm/min von dem ausgehärteten Klebstoff abgeschält.

Hierfür musste im Mittel für die silikonbeschichteten Proben aus Beispiel 1 (beide Varianten S1 und S2) eine Kraft von unter 0,08 N/cm aufgewendet werden, während bei Referenzmessungen die unbeschichtete, silikonfreie Folie erst bei ca. 8 N/cm abgeschält werden konnte. Dabei war deutlich zu sehen, dass die unbeschichtete Folie durch das Ziehen plastisch deformiert wurde, die silikonbeschichteten Folien aus Beispiel 1-S1 und S2 aber nicht.

Die Schälkraft lässt sich über die Menge des eingesetzten CRA steuern. Die Schälkraft der Folie nach Beispiel 1-S2 war um den Faktor 5 größer als die der Folie nach Beispiel 1-S1. Die CRA fungieren vermutlich als zusätzlich Vernetzungspunkte im Siliconnetzwerk, so dass das Siliconelastomer höhere Elastizitätsmoduli aufweist.

### Beispiel 5

### Glasfaser-Verbundbauteil (Rotorblatt), hergestellt mit Infusions-Technologie

Vor der Fertigung einer GFK-Außenhaut eines Rotorblattes für Windenergieanlagen mit Hilfe der Infusions-Technologie wird die Form anstatt mit einem flüssigen Trennmittel mit einer 35 µm dicken TPE-E-Folie, welche zuvor auf der der Form abgewandten Seite analog zu Beispiel 1 mit der Silikoniserungszubereitung 2 silikonisiert worden war, umspannt. Diese Folie wird anschließend durch Evakuieren bei Raumtemperatur in die Form tiefgezogen und darauf die Glasfaser-Gelege sowie die weiteren Fertigungselemente platziert. Nach dem üblichen Vakuumaufbau wird das Fasermaterial evakuiert und das epoxybasierte Matrixharz infusioniert. Das GFK-Bauteil wird nun wie üblich durch Erwärmen ausgehärtet und anschließend mit der TPE-E-Folie aus der Form entnommen. Die Folie verbleibt als Oberflächenschutz bis nach dem Transport zur Windenergieanlage weitestgehend auf dem Decklack. Vor der Montage wird die Folie (z.B. per Hand) abgezogen. Dabei verbleibt die Silikonbeschichtung nahezu vollständig auf der Folie. Nach 100 Stunden Kontaktzeit werden lediglich 2,5 +/-0,5 at% Si mittels XPS auf dem GFK-Bauteil ermittelt. Die Oberflächenstruktur der matten TPE-E-Folie sorgt für eine matte Oberfläche auf der ausgehärteten Rotorblatt-Außenhaut.

### Beispiel 6

### Wickeltechnik

Mit Hilfe der Wickeltechnik werden Kohlenstofffasern (Carbonfasern), die während des Wickelvorgangs mit einem epoxy-basierten Matrixharz benetzt wurden, geformt und anschließend in einem Autoklaven ausgehärtet. Für eine trennmittelfreie Entformung wird vor dem Wickeln ein 50 µm dicker Kunststoffschlauch aus TPE-E, welcher zuvor außen analog zu Beispiel 1 mit der Silikoniserungszubereitung 2 silikonisiert worden war, auf den Kern gezogen. Nach dem Wickeln wird von außen ein zweiter 50 µm dicker TPE-E-Schlauch, welcher ebenfalls zuvor außen analog zu Beispiel 1 mit der Silikoniserungszubereitung 2 silikonisiert worden war, über die Fasern gezogen. Dabei wird die Außenseite des Schlauches allerdings nach innen gestülpt. Dieser zweite Schlauch verfügt über regelmäßige Löcher, durch die überschüssiges Harzmaterial im Autoklaven entweichen kann.

### Beispiel 7

### Kohlenstofffaser-Verbundbauteil, hergestellt mit der Prepreg-Technologie

Mit Hilfe der Prepreg-Technologie werden vorimprägnierte Kohlenstofffasern, die nach ihrer Herstellung mit einem epoxy-basierten Matrixharz benetzt wurden, manuell (Handlaminieren) oder maschinell (z.B. Tapelegen, Fiberplacement) auf bzw. in eine Form mit einer Trennfolie gemäß Beispiel 1-S2 (ab-)gelegt und anschließend in einem Autoklaven ausgehärtet. Die silikonisierte Seite der Folie befindet sich dabei auf der der Form abgewandten Seite und wird so in die Form tiefgezogen, dass diese faltenfrei auf der Formoberfläche aufliegt. Das anschließende Ablegen der Prepreglagen erfolgt derart, dass die erste Lage auf der zuvor tiefgezogenen beschichteten Schutzfolie zu liegen kommt. Nach dem Ablegen der letzten Prepreglage erfolgt der übliche Vakuumaufbau (mit Loch-ETFE-Folie, Breather und Vakuumfolie) sowie das ein Aushärten im Autoklaven analog zu den in Bespiel 1 für das Gewebe-Prepreg 977-2A-35-6KHTA-5H-370-T2 genannten Bedingungen. Nach dem Entformen verbleibt die TPE-Folie zunächst noch als Oberflächenschutz auf dem CFK-Bauteil und wird erst bei Bedarf abgezogen. Dabei verbleibt die Silikonisierung nahezu komplett auf der TPE-Folie. Die CFK-Oberfläche ist frei von flüssigen Trennmitteln und kann daher beispielsweise einfacher als nach der Benutzung von Trennmitteln lackiert werden.

### Beispiel 8

### Vorimprägnierte Halbzeuge zur Fertigung von Faserverbundbauteilen: Blitzschutz-Halbzeuge

Für die Fertigung eines Faserverbund-Außenhaut-Bauteiles mit Hilfe von vorimprägnierten Blitzschutz-Halbzeugen (Kupfergitter) wird das mit einem Epoxidharz vorimprägnierte Kupfergitter mit einer 40 µm dicken TPE-E-Folie, welche zuvor auf der zum vorimprägnierte Kupfergitter gewandten Seite analog zu Beispiel 1 mit der Silikoniserungszubereitung 2 silikonisiert worden war, auf eine Rolle gewickelt. Dieses vorimprägnierte Kupfergitter wird anschließend mit der Folie in die Form manuell oder maschinell abgelegt. Eine gegebenenfalls erforderliche Überlappung benachbarter Bahnen zur Sicherstellung einer elektrischen Stromleitung wird dadurch gewährleistet, dass entweder die Folie des überlappenden Randbereichs auf der oberen Bahn direkt vor dem Einlegen abgezogen wird oder dieser Randbereich nicht mit dieser Folie ausgestattet wird. Auf dem Blitzschutz-Halbzeug werden nun wie üblich mehrere Lagen Prepreg abgelegt. Nach der üblichen Autoklavaushärtung erfolgt eine saubere Entformung der Faserverbund-Außenhaut inkl. der Trennfolie aus der Form. Die Trennfolie verbleibt zunächst noch auf dem CFK-Bauteil und wird bei Bedarf abgezogen.

### Beispiel 9

### Vorimprägnierte Halbzeuge zur Fertigung von Faserverbundbauteilen: Faser-Gelege

Für die Fertigung eines Faserverbund-Bauteiles mit wird unidirektionalem Epoxidharz-Prepreg mit einer 40 µm dicken TPE-E-Folie, welche zuvor auf der zum Prepreg gewandten Seite analog zu Beispiel 1 mit der Silikoniserungszubereitung 2 silikonisiert worden war, auf eine Rolle gewickelt. Dieses Prepreg wird anschließend als erste Lage mit der Folie maschinell auf Stoß in eine Form abgelegt. Auf dieser ersten Lage werden nun wie üblich weitere Lagen Prepreg ohne die Folie abgelegt. Nach der üblichen Autoklavaushärtung erfolgt eine saubere Entformung der Faserverbund-Außenhaut inkl. der temporären Schutzfolie aus der Form. Die Folie verbleibt zunächst noch auf dem CFK-Bauteil und wird bei Bedarf abgezogen.

## Patentansprüche

1. Silikonisierte Trennfolie für die Herstellung von Kunststoff-Formteilen aus Faserverbundwerkstoffen unter Verwendung einer Form, umfassend eine flexible, bei Raumtemperatur vakuumtiefziehfähige Trägerfolie, die allein durch den Atmosphärendruck faltenfrei und ohne Lufteinschlüsse konturgenau abdeckt, und eine in flüssiger Form auftragbare Beschichtung, die nach dem Entfernen eventueller Lösungsmittel zu mehr als 90 Atom% aus Silizium, Kohlenstoff und/oder Sauerstoff, zu mehr als 45 Atom% aus Kohlenstoff, sowie zu mehr als 20 Atom% aus Silizium besteht, jeweils bezogen auf die gesamte Beschichtung und gemessen durch XPS, **dadurch gekennzeichnet, dass** die Beschichtung durch Additionsreaktionen, Kondensationsreaktionen oder durch Strahlung vernetzt ist und dass die Trägerfolie eine Bruchdehnung nach DIN EN ISO 527, längs und quer, von: 100% bis 2000% aufweist.

2. Trennfolie nach Anspruch 1, **dadurch gekennzeichnet, dass** die Trägerfolie eine Spannung bei 50%-Dehnung nach DIN EN ISO 527 von 1 bis 40 MPa aufweist.

3. Trennfolie nach einem der vorangehenden Ansprüche **dadurch gekennzeichnet, dass** die Trägerfolie einen Erweichungsbereich zwischen 100 und 450°C aufweist.

4. Trennfolie nach einem der vorangehenden Ansprüche **dadurch gekennzeichnet, dass** die Beschichtung durch Strahlung vernetzt ist.

5. Trennfolie nach einem der vorangehenden Ansprüche **dadurch gekennzeichnet, dass** die vernetzte Beschichtung höchstens 5 Gew.% extrahierbare Bestandteile enthält.

6. Trennfolie nach einem der vorangehenden Ansprüche **dadurch gekennzeichnet, dass** die Trägerfolie aus thermoplastischen Polyesterelastomeren (TPE-E), thermoplastischen Copolyestern (TPC), vernetzten thermoplastischen Elastomerne auf Olefinbasis (TPE-V / TPV); thermoplastischen Elastomeren auf Urethanbasis (TPE-U / TPU) thermoplastischen Copolyamiden (TPE-A / TPA) und/oder Mischungen aus Ethylenvinylacetat und Polyvinylidenchlorid (EVA/PVDC) besteht.

7. Trennfolie nach einem der vorangehenden Ansprüche **dadurch gekennzeichnet, dass** die Trägerfolie eine Bruchspannung nach DIN EN ISO 527, längs und quer, von 10 bis 150 MPa aufweist.

8. Trennfolie nach einem der vorangehenden Ansprüche **dadurch gekennzeichnet, dass** die Trägerfolie eine Weiterreißwiderstand nach DIN ISO 34-1, B, längs und quer, von 30 bis 500 kN/m aufweist.

9. Trennfolie nach einem der vorangehenden Ansprüche **dadurch gekennzeichnet, dass** die Trägerfolie eine Foliendicke von 8 µm bis 250 µm aufweist.

10. Trennfolie nach einem der vorangehenden Ansprüche, **dadurch gekennzeichnet dass** die Trägerfolie in einem tiefgezogenen Zustand vorliegt.

11. Anordnung aus einer Form zur Formgebung eines Kunststoffwerkstückes und darin tiefgezogen eine Trennfolie nach einem der Ansprüche 1 -10.

12. Verfahren zur Herstellung einer Trennfolie nach einem der Ansprüche 1 - 10 durch Beschichtung einer bei Raumtemperatur vakuumtiefziehfähigen Trägerfolie, umfassend oder bestehend daraus, dass die Folie in einem ersten Schritt durch eine Behandlung mit nasschemischen Primern, Corona, DBD, Niederdruckplasma, Atmosphärendruckplasma, und/oder Vakuum-UV-Strahlung aktiviert wird, in einem zweiten Schritt eine reaktive Silikonmischung durch Rakel oder Walzen aufgetragen wird, wobei das Flächengewicht 2 bis 50 g/m² beträgt und in einem dritten Schritt die reaktive Silikonmischung vernetzt wird.

13. Verwendung einer Trennfolie nach einem der vorangehenden Ansprüche als Entformungshilfe bei der Herstellung von Kunststoff-Formteilen aus Faserverbundwerkstoffen.

14. Verwendung einer Trennfolie nach einem der vorangehenden Ansprüche als Schutzfolie für Kunststoff-Formteile aus Faserverbundwerkstoffen.

## Claims

1. Siliconized release film for the production of polymer mouldings composed of fibre composite materials using a mould, which comprises a flexible support film which is capable of vacuum deep drawing at room temperature and which covers and accurately reproduces contours, without folds and without air inclusions, by means of atmospheric pressure alone, and a coating which can be applied in liquid form and consists, after removal of any solvent, of more than 90 atom% of silicon, carbon and/or oxygen, more than 45 atom% of carbon and more than 20 atom% of silicon, in each case based on the total coating and measured by XPS, **characterized in that** the coating has been crosslinked by means of addition reactions, condensation reactions or radiation and **in that** the support film has an elongation at break in accordance with DIN EN ISO 527, longitudinally and transversely, of from 100% to 2000%.

2. Release film according to Claim 1, **characterized in that** the support film has a stress at 50% elongation in accordance with DIN EN ISO 527 of from 1 to 40 MPa.

3. Release film according to either of the preceding claims, **characterized in that** the support film has a softening range of between 100°C and 450°C.

4. Release film according to any of the preceding claims, **characterized in that** the coating has been crosslinked by means of radiation.

5. Release film according to any of the preceding claims, **characterized in that** the crosslinked coating contains not more than 5% by weight of extractable constituents.

6. Release film according to any of the preceding claims, **characterized in that** the support film consists of thermoplastic polyester elastomers (TPE-E), thermoplastic copolyesters (TPC), crosslinked thermoplastic elastomers based on olefin (TPE-V/TPV), thermoplastic elastomers based on urethane (TPE-U/TPU), thermoplastic copolyamides (TPE-A/TPA) and/or mixtures of ethylene-vinyl acetate and polyvinylidene chloride (EVA/PVDC).

7. Release film according to any of the preceding claims, **characterized in that** the support film has a breaking stress in accordance with DIN EN ISO 527, longitudinally and transversely, of from 10 to 150 MPa.

8. Release film according to any of the preceding claims, **characterized in that** the support film has a tear propagation resistance in accordance with DIN ISO 34-1, B, longitudinally and transversely, of from 30 to 500 kN/m.

9. Release film according to any of the preceding claims, **characterized in that** the support film has a film thickness of from 8 µm to 250 µm.

10. Release film according to any of the preceding claims, **characterized in that** the support film is present in a deep-drawn state.

11. Arrangement made up of a mould for moulding a polymer workpiece and a release film according to any of Claims 1-10 deep-drawn therein.

12. Process for producing a release film according to any of Claims 1-10 by coating a support film which is capable of vacuum deep drawing at room temperature, which comprises or consists of activating the film by treatment with wet-chemical primers, corona, DBD, low-pressure plasma, atmospheric pressure plasma and/or vacuum-UV radiation in a first step, applying a reactive silicone mixture by doctor blade coating or rolling in a second step, where the weight per unit area is from 2 to 50 g/m², and crosslinking the reactive silicone mixture in a third step.

13. Use of a release film according to any of the preceding claims as demoulding aid in the production of polymer mouldings composed of fibre composite materials.

14. Use of a release film according to any of the preceding claims as protective film for polymer mouldings composed of fibre composite materials.

## Revendications

1. Feuille de séparation siliconée pour la fabrication de pièces moulées en matière plastique en matériaux composites de fibre en utilisant un moule, comprenant un film porteur flexible apte à être embouti sous vide à température ambiante qui recouvre les contours exacts sans piégeages d'air et seulement sans pli par la pression atmosphérique, et un revêtement applicable sous la forme liquide qui se compose, après le retrait de solvants éventuels, de plus de 90 % d'atome de silicium, de carbone et/ou d'oxygène, de plus de 45 % d'atome de carbone, ainsi que de plus de 20 % d'atome de silicium, respectivement par rapport au revêtement entier et mesuré par XPS, **caractérisée en ce que** le revêtement est réticulé par des réactions d'addition, des réactions de condensation ou par rayonnement et que la feuille de séparation présente un allongement à la rupture selon DIN EN ISO 527, longitudinalement et transversalement, de 100 % à 2 000 %.

2. Feuille de séparation selon la revendication 1, **caractérisée en ce que** la feuille porteuse présente une tension à 50 % d'allongement selon DIN EN ISO 527 de 1 à 40 MPa.

3. Feuille de séparation selon l'une des revendications précédentes, **caractérisée en ce que** la feuille porteuse présente une plage de ramollissement entre 100 et 450 °C.

4. Feuille de séparation selon l'une des revendications précédentes, **caractérisée en ce que** le revêtement est réticulé par rayonnement.

5. Feuille de séparation selon l'une des revendications précédentes, **caractérisée en ce que** le revêtement réticulé contient au plus 5 % en poids de constituants extractibles.

6. Feuille de séparation selon l'une des revendications précédentes, **caractérisée en ce que** la feuille porteuse se compose d'élastomères de polyester thermoplastiques (TPE-E), de copolyesters thermoplastiques (TPC), d'élastomères thermoplastiques réticulés à base d'oléfine (TPE-V/TPV) ; d'élastomères thermoplastiques à base d'uréthane (TPE-U/TPU), copolyamides thermoplastiques (TPE-A/TPA) et/ou des mélanges d'éthylènevinylacétate et de chlorure de polyvinylidène (EVA/PVDC).

7. Feuille de séparation selon l'une des revendications précédentes, **caractérisée en ce que** la feuille porteuse présente une tension à la rupture selon DIN EN ISO 527, longitudinalement et transversalement, de 10 à 150 MPa.

8. Feuille de séparation selon l'une des revendications précédentes, **caractérisée en ce que** la feuille porteuse présente une résistance à la déchirure selon DIN ISO 34-1, B, longitudinalement et transversalement, de 30 à 500 kN/m.

9. Feuille de séparation selon l'une des revendications précédentes, **caractérisée en ce que** la feuille porteuse présente une épaisseur de feuille de 8 µm à 250 µm.

10. Feuille de séparation selon l'une des revendications précédentes, **caractérisée en ce que** la feuille porteuse se présente dans un état embouti.

11. Agencement d'un moule de formation d'une pièce en matière plastique et emboutie dans celui-ci d'une feuille de séparation selon l'une des revendications 1 à 10.

12. Procédé de fabrication d'une feuille de séparation selon l'une des revendications 1 à 10 par revêtement d'une feuille porteuse apte à être emboutie sous vide à température ambiante, comprenant les étapes suivantes ou s'en composant, la feuille est activée dans une première étape par un traitement avec des apprêts chimiques par voie humide, corona, DBD, plasma à basse pression, plasma à pression atmosphérique, et/ou rayonnement UV sous vide, dans une deuxième étape un mélange de silicone réactif est appliqué par raclage ou laminage, dans lequel le grammage s'élève de 2 à 50 g/m² et dans une troisième étape le mélange de silicone réactif est réticulé.

13. Utilisation d'une feuille de séparation selon l'une des revendications précédentes comme aide à la déformation lors de la fabrication de pièces moulées en matière plastique en matériaux composites de fibre.

14. Utilisation d'une feuille de séparation selon l'une des revendications précédentes comme feuille de protection pour des pièces moulées en matière plastique en matériaux composites de fibre.
